# EUROPÄISCHE PATENTSCHRIFT

(11) **EP 3 251 481 B1**
(45) Veröffentlichungstag und Bekanntmachung des Hinweises auf die Patenterteilung: **27.01.2021**
(21) Anmeldenummer: 17173353.8
(22) Anmeldetag: 30.05.2017
(51) Int. Cl.: A01B 59/048, A01B 59/06, A01B 51/02, A01B 69/04, A01D 34/66, A01D 34/86, E01H 1/00, E01H 5/04

(54) **EINACHSGERÄTETRÄGER UND ANBAUGERÄT FÜR EINEN EINACHSGERÄTETRÄGER**
SINGLE AXLE DEVICE SUPPORT AND ADD-ON FOR A SINGLE AXLE DEVICE SUPPORT
PORTE-OUTILS MONO-AXE ET APPAREIL PORTÉ POUR UN PORTE-OUTILS MONO-AXE

(30) Priorität: 30.05.2016 DE 102016109902; 13.06.2016 DE 102016110810
(43) Veröffentlichungstag der Anmeldung: 06.12.2017
(73) Patentinhaber: Brielmaier Motormäher GmbH, 88048 Friedrichshafen (DE)
(72) Erfinder: Brielmaier, Martin, 88048 Friedrichshafen (DE)
(74) Vertreter: Patentanwälte und Rechtsanwalt Weiß, Arat & Partner mbB

(56) Entgegenhaltungen:
- EP-A1- 1 731 010
- EP-A1- 1 731 014
- EP-A1- 3 155 890
- WO-A1-99/48349
- AT-B- 213 129
- DE-A1- 2 807 482
- DE-T2-602004 004 307
- DE-U1-202010 015 604
- NL-C1- 1 008 723
- US-A- 4 926 621
- US-A1- 2008 223 591

## Beschreibung

### Technisches Gebiet

Die Erfindung betrifft einen Einachsgeräteträger nach dem Oberbegriff des Anspruchs 1.

### Stand der Technik

Aus dem Stand der Technik sind Einachsgeräteträger mit verschiedenen Anbaugeräten bekannt. Bei den Anbaugeräten, die im Regelfall auswechselbar sind, kann es sich nur beispielsweise um Mähwerke, Mähbalken, Bandrechen, Mulchgeräte, Schneeschieber, Reinigungselemente oder Heuschieber handeln.

In der AT 213 129 B ist ein Frontbindemäher als Einachsschlepperzusatzgerät offenbart, wobei der Garbenauswerfer innerhalb der Arbeitsbreite des Mähwerks angeordnet ist.

In der DE 60 2004 004 307 T2 ist eine Vorrichtung zur Höheneinstellung eines Mähers offenbart, wobei hier Einzelheiten der Schneidtrommeleinheit beschrieben sind.

Außerdem wird auf die DE 20 2010 015 604 U1 hingewiesen, welcher einen Aufsitzhangmäher mit Nullwenderadius-Lenkeinrichtung aufweist.

Weiter wird auf eine selbstfahrende Ballenpresse aus der EP 3 155 890 A1 hingewiesen.

Ergänzend wird auf die NL 100 87 23 C hingewiesen. Dort ist ein landwirtschaftliches Gerät beschrieben, welches über die Breite des ziehenden Arbeitsgerätes hinweg landwirtschaftliche Vorrichtungen zur Bearbeitung der Ackerfläche aufweist.

In der WO 99/48349 A1 ist ein landwirtschaftliches Gerät offenbart, welches an die Frontseite eines Traktors anbaubar ist, um damit landwirtschaftliche Ackerfläche zu bearbeiten. Eine ähnliche Konstruktion findet sich ausserdem in der US 2008/0223591 A1.

Ein solcher Einachsträger mit Stachelwalzen ist beispielsweise in der EP 1 731 010 B1 und der EP 1 731 014 A1 offenbart.

In der DE 28 07 482 A1 ist eine selbstfahrende und vollautomatische Maschine zum Pflegen einer Rasenfläche offenbart, wobei die Maschine sich selbst überlassen werden kann.

In der US 4 926 621 A wird ferner ein selbstfahrenden Fahrmäher oder eine selbstfahrende Mähmaschine mit einem rückwärtigen gezogenen Mäher, wobei der gezogene Mäher trailerartig hinter dem frontseitig positionierten selbstfahrenden Mähtraktor hergezogen wird, offenbart. Ein vorderer selbstfahrender Mähtraktor oder die vordere Mähmaschine, beinhaltet eine eigene Schneideinheit mit einem Motor, der zum Antreiben der Antriebsräder verwendet wird, sowie einen Front- oder Bauchmäher. Zwischen dem Frontmäher und dem gezogenen Mäher ist eine Anhängerverbindungsvorrichtung montiert, so dass der gezogene Mäher mit dem Frontmäher verbunden ist und diesem trailerartig folgt.
Solche Einachsgeräteträger kommen dabei insbesondere bei der Bearbeitung von landwirtschaftlichen Flächen in unwegsamem Gelände, wie beispielsweise Steilhängen in Mittelgebirgslagen oder Gebirgslagen.

Bei Anbaugeräten aus dem Stand der Technik, beispielsweise breiten Mähbalken oder Bandrechen, kann an Steilhängen auf Grund der Breite der Anbaugeräte ein Geradeauslauf des Einachsgeräteträgers mit dem Anbaugerät dabei häufig nur durch einen Lenkeingriff des Einachsgeräteträgers gewährleistet werden.

### Aufgabe der Erfindung

Aufgabe der Erfindung ist einen Einachsgeräteträger mit einem Anbaugerät zur Verfügung zu stellen, das insbesondere in Steilhanglagen einen bessere Steuerung und einen besseren Geradeauslauf aufweist. Zudem ist es Aufgabe der Erfindung, einen Einachsgeräteträger mit einem Anbaugerät zur Verfügung zu stellen, der auch mit Anbaugeräten grossen Arbeitsbreiten einfach zu steuerbar ist. Auch ist es Aufgabe der Erfindung ein Anbaugerät für einen Einachsgeräteträger zur Verfügung zu stellen, das lenkbar ist.

### Lösung der Aufgabe

Zur Lösung der Aufgabe führen die Merkmale nach dem Anspruch 1. Vorteilhafte Ausgestaltungen sind in den Unteransprüchen beschrieben.

Ein erfindungsgemässer Einachsgeräteträger umfasst ein wechselbares Anbaugerät. Hierfür weist der Einachsgeräteträger in einem typischen Ausführungsbeispiel eine Aufnahme für das Anbaugerät auf. Bei dem Anbaugerät kann es sich beispielsweise um einen Mähbalken, ein Mähwerk, ein Bandrechen, ein Mulchgerät, einen Schneeschieber, einen Heuschieber, ein Anbaukreisler/-heuwender, einen Anbauschwader oder ein Reinigungselement, das beispielsweise zur Strassenreinigung genutzt werden kann, handeln. Das wechselbare Anbaugerät des erfindungsgemässen Einachsgeräteträgers umfasst dabei zumindest eine Stützrolle, die lenkbar ist. In weiteren, bevorzugten Ausführungsbeispielen umfasst das wechselbare Anbaugerät zumindest zwei Stützrollen, die lenkbar sind.

Nach dem Anspruch 1 erfolgt eine Steuerung der zumindest einen Stützrolle über eine Steuerung, die mit einer Lenkung der Radeinheiten des Einachsgeräteträgers gekoppelt ist. Dadurch kann eine Bewegung der zumindest einen Stützrolle und der Radeinheiten aufeinander abgestimmt beschleunigt und/oder verzögert werden, wodurch eine optimale Bewegung und Steuerung des Einachsgeräteträgers mit dem Anbaugerät gewährleistet werden kann.

Eine Ansteuerung der lenkbaren Stützrolle erfolgt über einen Stellantrieb. Bei dem Stellantrieb kann es sich in Ausführungsbeispielen um einen hydraulischen, einen elektrischen, einen elektromechanischen, einen mechanischen oder einen pneumatischen Stellantrieb handeln. Der Stellantrieb umfasst einen hydraulischen Stellzylinder und/oder ein elektrisches Stellglied und/oder ein hydraulisches Schneckengetriebe. Das Schneckengetriebe wird dabei vorzugsweise von einem Hydraulikmotor angetrieben. In einem Ausführungsbeispiel ist der Hydraulikmotor in dem Stellantrieb umfasst. Die durch einen Steuerbefehl der Steuerung ausgelöste Lenkbewegung der Stützrolle erfolgt auch über eine Pneumatik oder einen Seilzug. In Ausführungsbeispielen können verschiedene Ansteuerungsmechanismen, insbesondere das Schneckengetriebe, das in einem Ausführungsbeispiel hydraulisch angesteuert wird, die hydraulischen Stellzylinder und/oder die elektrischen Stellglieder, kombiniert zur Ansteuerung an der zumindest einen lenkbaren Stützrolle angebracht sein bzw. mit dieser in Wirkverbindung stehen, sodass ein redundantes System geschaffen werden kann, wodurch bei einem Ausfall von einem der genutzten Stellantriebe für die Lenkung ein anderer Stellantrieb die Lenkarbeit übernehmen kann.

In einem weiteren Ausführungsbeispiel umfasst der Einachsgeräteträger und/oder das Anbaugerät Sensoren, die mit der Steuerung des Einachsgeräteträgers und/oder der Lenksteuerung des Anbaugerätes in Wirkverbindung stehen. Durch die Sensoren kann dabei eine Bewegung des Einachsgeräteträgers und des Anbaugeräts überwacht werden, so dass die Steuerung beispielsweise in Hanglagen zur Gewährleistung einer Geradeausfahrt korrigierende Lenkbewegungen an eine der lenkbaren Stützrollen und/oder der Radeinheiten des wechselbaren Anbaugeräts bzw. des Einachsgeräteträgers übermitteln kann.

Zudem ist die Steuerung dazu geeignet, die Sensorwerte, die aus der Überwachung der Bewegung des Einachsgeräteträgers und des Anbaugeräts stammen mit Steuerbefehlen eines elektronisch arbeitendem Handlenkers und/oder einer Fernsteuerung zu vergleichen, wobei auch hier bei einer Abweichung ein automatischer Steuerbefehl an die zumindest eine Stützrolle und/oder die Radeinheit durch die Steuerung weitergegeben wird. Dadurch kann neben dem Geradeauslauf an steilen Hanglagen beispielsweise auch eine durch den Nutzer des Einachsgeräteträgers hervorgerufene Kurvenfahrt des Einachsgeräteträgers mit dem Anbaugerät koordinierter und gezielter gefahren werden, wobei dies insbesondere in Steilhanglagen die Bedienung und Steuerung des Einachsgeräteträgers mit dem wechselbaren Anbaugerät erleichtern kann.

In Ausführungsbeispielen kann die Stützrolle als Radelement mit einem Vollgummireifen, einem luftbefüllten Gummireifen auf einer Metallfelge, kreisförmigen Metallradelementen und/oder eine Stachelwalze umfassen. Zudem ist auch die Kombination beispielsweise eines luftgefüllten Gummireifens und einer ein- oder mehrreihigen Stachelwalze als Stützrolle möglich. Für den Einsatz in Steilhanglagen kommen dabei insbesondere Stachelwalzen in Betracht, da diese, wie in der EP 1 731 010 B1 offenbart, einerseits eine gute Haftung des Einachsgeräteträgers mit dem Anbaugerät an Steilhängen ermöglicht und andererseits dabei bodenschonend ist.

In Ausführungsbeispielen umfasst das wechselbare Anbaugerät des Einachsgeräteträgers zumindest an einem seitlichen Ende eine lenkbare Stützrolle. Vorzugsweise umfasst das wechselbare Anbaugerät einends an den seitlichen Enden eine lenkbare Stützrolle. Weiterhin ist insbesondere bei sehr breiten Mähbalken und/oder weiteren Anbaugeräten auch der Einsatz mehrerer Stützrollen, die lenkbar sind, möglich. Vorzugsweise sind die Stützrollen dabei im Wesentlichen gleichmässig über die gesamte Breite des Anbaugeräts verteilt, jedoch zumindest gleichmässig auf den beiden Seiten seitlich der Aufnahme für das Anbaugerät an dem Einachsgeräteträger.

Ein weiterer wesentlicher Bestandteil der Erfindung ist das Anbaugerät für einen Einachsgeräteträger selbst, das eine lenkbare Stützrolle aufweist, wobei eine Lenkbewegung der Stützrolle über einen Stellantrieb, insbesondere einen hydraulischen Stellantrieb erfolgt. In weiteren Ausführungsbeispielen kann ein mechanischer, pneumatischer oder elektromechanischer Stellantrieb für die Lenkung der Stützrolle zum Einsatz kommen und genutzt werden. Der Stellantrieb umfasst ein hydraulisches Schneckengetriebe, das vorzugsweise von einem im Stellantrieb umfassten Hydraulikmotor angetrieben wird, und/oder einen hydraulischen Stellzylinder und/oder ein elektrisches Stellglied.

Weiterhin kann die Lenkbewegung auch durch eine Pneumatik oder ein mechanisches Lenksystem hervorgerufen werden. Vorzugsweise handelt es sich bei einem solchen Anbaugerät mit zumindest einer lenkbaren Stützrolle um einen Mähbalken, einen Heuschieber, einen Bandrechen oder ein Mulchgerät.

Das erfindungsgemässe Anbaugerät ist dabei mit einem Einachsgeräteträger koppelbar. Dabei ist zudem die Lenksteuerung der lenkbaren Stützrolle mit einer Lenksteuerung des Trägerfahrzeugs, bei dem es sich um einen Einachsgeräteträger handelt, koppelbar.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische Ansicht auf ein Ausführungsbeispiel eines Einachsgeräteträgers mit einem erfindungsgemässen wechselbaren Anbaugerät;
- Figur 2: eine Vorderansicht auf ein weiteres Ausführungsbeispiel eines erfindungsgemässen Einachsgeräteträgers mit einem wechselbaren Anbaugerät;
- Figur 3: eine Draufsicht auf den Einachsgeräteträger mit dem wechselbaren Anbaugerät nach Figur 2; und
- Figur 4: eine Seitenansicht auf den Einachsgeräteträger mit dem wechselbaren Anbaugerät nach Figur 2.

### Ausführungsbeispiel

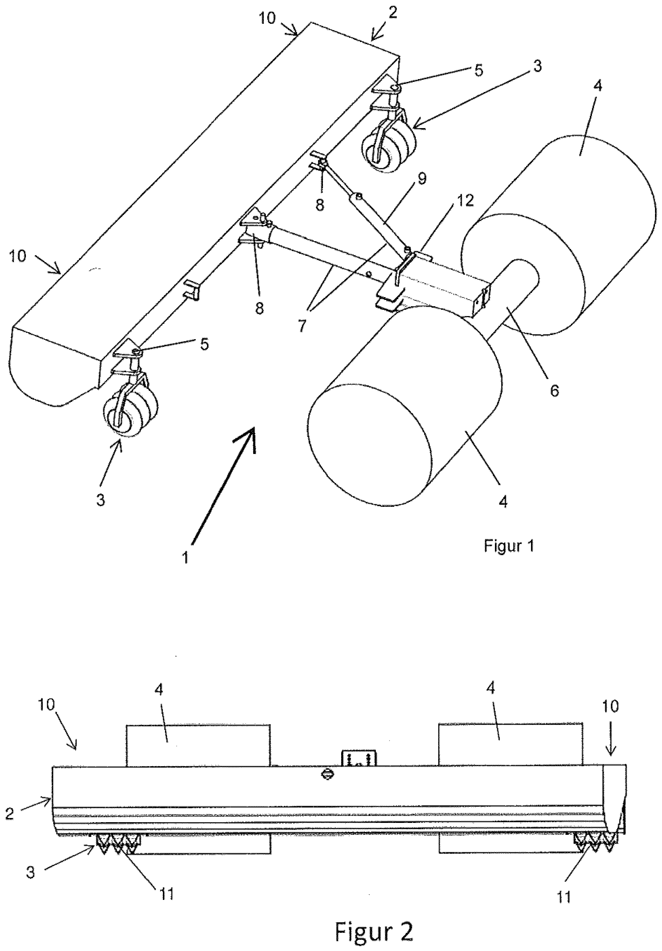

Figur 1 zeigt eine perspektivische Ansicht auf einen schematisch dargestellten Einachsgeräteträger 1 mit einem wechselbaren Anbaugerät 2. Bei einem Einachsgeräteträger handelt es sich im Regelfall um ein landwirtschaftliches Trägerfahrzeug, bei dem Radeinheiten 4 auf einer einzigen Achse 6 angeordnet sind. Ein Antriebsaggregat des Einachsgeräteträgers 1 kann dabei beispielsweise zwischen den Radeinheiten 4 oder in den Radeinheiten 4, wie es beispielsweise in der EP 1 731 014 A1 offenbart ist, angeordnet sein.

In dem in den Figuren dargestellten Ausführungsbeispiel ist das jeweilige wechselbare Anbaugerät 2 über Koppelelemente 7 an einer Aufnahme 12 des Einachsgeräteträgers 1 befestigt. Die Koppelelemente 7 wiederum sind an dem wechselbaren Anbaugerät 2 an Koppelpunkten 8 durch aus dem Stand der Technik bekannte Verbindungsmittel wie beispielsweise Schrauben, Bolzen oder ähnlichem, gelagert/befestigt.

Das erfindungsgemässe Anbaugerät 2 umfasst zumindest eine Stützrolle 3, die lenkbar ist. In dem in Figur 1 dargestellten Ausführungsbeispiel umfasst das Anbaugerät 2 jeweils an seitlichen Enden 10 eine lenkbare Stützrolle 3, und somit im dargestellten Ausführungsbeispiel zwei lenkbare Stützrollen 3.

Die lenkbaren Stützrollen 3 sind dabei in einer Lagerung 5 des Anbaugeräts 2 gelagert. Das wechselbare Anbaugerät 2, wie in den Figuren 1 bis 4 dargestellt ist, umfasst zumindest zwei Stützrollen 3. Die Stützrollen 3 stehen dabei mit einem nicht näher dargestellten Stellantrieb in Wirkverbindung, so dass über den Stellantrieb die Stützrollen 3 für eine Lenkbewegung bewegt werden können.

Bei dem Stellantrieb handelt es sich um ein Schneckengetriebe, wobei das Schneckengetriebe vorzugsweise von einem Hydraulikmotor angetrieben wird, einen hydraulischen Stellzylinder und/oder einem nicht näher dargestellten elektrischen Stellglied. Der Stellantrieb ist im Bereich der Lagerung 5 in oder an dem Anbaugerät 2 und/oder in der Lagerung 5 angeordnet.

Die Steuerung der zumindest einen Stützrolle 3 ist mit einer Lenkung der Radeinheiten 4 des Einachsgeräteträgers 1 gekoppelt. Dadurch kann eine Bewegung der zumindest einen Stützrolle 3 und der Radeinheiten 4 so aufeinander abgestimmt werden, dass diese jeweils so beschleunigt und/oder verzögert werden, dass eine optimale Bewegung des Einachsgeräteträgers 1 mit dem wechselbaren Anbaugerät 2 gewährleistet werden kann. Dadurch kann beispielweise eine saubere Geradeausfahrt in Steilhanglagen gewährleistet werden.

Eine Steuerung der Stützrollen 3 und/oder der Radeinheiten 4 des Einachsgeräteträgers 1 erfolgt in einem typischen Ausführungsbeispiel über ein Steuersignal, das von einem nicht dargestellten elektronisch arbeitenden Handlenker und/oder einer nicht dargestellten Fernsteuerung an die Steuerung des Einachsgeräteträgers 1 und/oder eine Lenksteuerung der wechselbaren Anbaugeräts 2 gegeben wird. Die über den elektronisch arbeitenden Handlenker und/oder die Funkfernsteuerung getätigten Lenksignale werden dabei von einer Bedienperson des Einachsgeräteträgers vorgegeben oder können auch mittels zuvor programmierter GPS-Daten an die Lenksteuerung bzw. die Steuerung aus-/weitergegeben werden.

In einem weiteren Ausführungsbeispiel umfasst der Einachsgeräteträger 1 und/oder das wechselbare Anbaugerät 2 Sensoren, die mit der Steuerung des Einachsgeräteträgers 1 und/oder der Lenksteuerung des wechselbaren Anbaugeräts 2 in Wirkverbindung stehen. Durch die Sensoren kann eine Bewegung des Einachsgeräteträger 1 und des angekoppelten Anbaugeräts 2 überwacht werden.

Zudem kann die Steuerung die Sensorwerte vorzugsweise mit Steuerbefehlen des elektronisch arbeitenden Handlenkers und/oder der Fernsteuerung vergleichen und bei einer Abweichung einen automatischen Steuerbefehl an die zumindest eine Stützrolle 3 des Anbaugeräts 2 und/oder die Radeinheiten 4 des Einachsgeräteträgers 1 weitergeben. Hierdurch kann beispielsweise der Geradeauslauf des Einachsgeräteträgers 1 mit dem Anbaugerät 2 an einem Steilhang überwacht werden und ggf. durch die Steuerung aufgrund der Sensorwerte korrigierend durch Lenksignale für die Stützrolle 3 und/oder die Radeinheiten 4 eingegriffen werden, ohne dass dies nicht durch den Nutzer/Bediener des Einachsgeräteträgers 1 erfolgen muss.

In den Figuren 2 bis 4 ist ein weiteres Ausführungsbeispiel eines erfindungsgemässen Einachsgeräteträgers, der ein erfindungsgemässes wechselbares Anbaugerät 2 mit lenkbaren Stützrollen 3 umfasst, dargestellt.

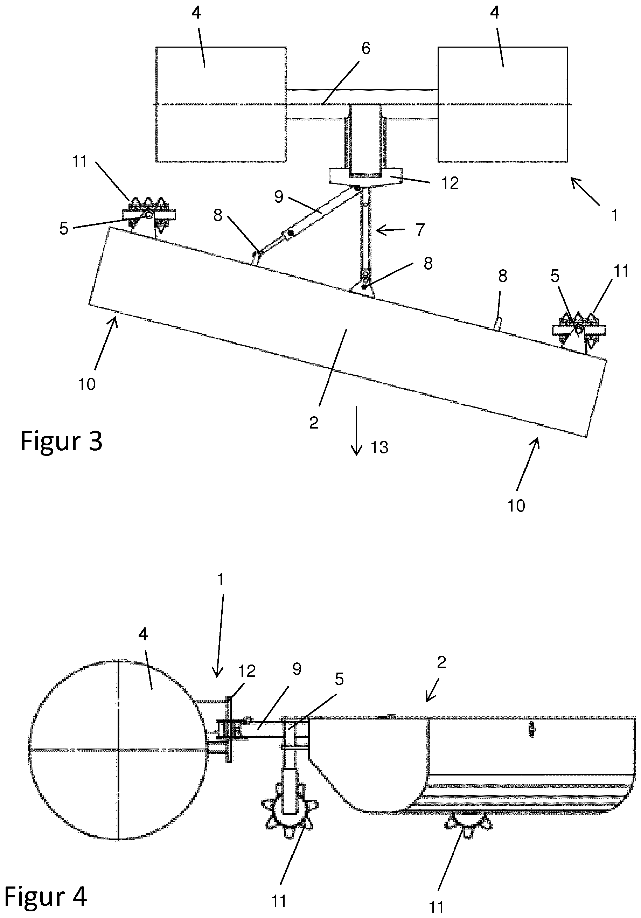

In dem in den Figuren 2 bis 4 dargestellten Ausführungsbeispiel sind die Stützrollen 3 als Stachelwalzen 11 ausgebildet und ebenfalls in Lagerung 5 an seitlichen Enden 10 des Anbaugeräts 2 gelagert. Weiterhin ist insbesondere in den Figuren 3 und 4 dargestellt, dass zumindest eines der Koppelelemente 7 als Verstellzylinder 9 ausgebildet sein kann, so dass das Anbaugerät 2 schräg zu einer Fahrtrichtung 13 gestellt werden kann.

In Ausführungsbeispielen kann es sich bei dem wechselbaren Anbaugerät 2 um einen Mähbalken, einen Heuschieber, einen Bandrechen, ein Mulchgerät, einen Anbauschwader, einen Anbaukreiselwender, einen Schneeschieber ober ein Reinigungsgerät handeln. Vorzugsweise kann aber eine Längssteuerung der Stützrolle 3 des Anbaugeräts 2 mit einer Längssteuerung des Trägerfahrzeugs gekoppelt werden.

**Bezugszeichenliste**

| | | | | | |
|---|---|---|---|---|---|
| 1 | Einachsgeräteträger | 34 | | | |
| 2 | Anbaugerät | 35 | | | |
| 3 | Stützrolle | 36 | | | |
| 4 | Radeinheit | 37 | | | |
| 5 | Lagerung | 38 | | | |
| 6 | Achse | 39 | | | |
| 7 | Koppelelement | 40 | | | |
| 8 | Koppelpunkt | 41 | | | |
| 9 | Verstellzylinder | 42 | | | |
| 10 | seitliches Ende | 43 | | | |
| 11 | Stachelwalze | 44 | | | |
| 12 | Aufnahme | 45 | | | |
| 13 | Fahrtrichtung | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Einachsgeräteträger (1) umfassend ein wechselbares Anbaugerät (2), wobei das Anbaugerät (2) zumindest eine Stützrolle (3) umfasst, die lenkbar ist, wobei das Anbaugerät (2) zumindest zwei Stützrollen (3) umfasst, wobei die Steuerung der zumindest einen Stützrolle (3) mit einer Lenkung von Radeinheiten (4) des Einachsgeräteträgers (1) gekoppelt ist, sodass eine Bewegung der zumindest einen Stützrolle(3) und der Radeinheiten (49 aufeinander abgestimmt beschleunigt und/oder verzögert wird, wobei eine Lenkbewegung der Stützrolle (3) über einen Stellantrieb erfolgt und der Stellantrieb ein hydraulisches Schneckengetriebe und/oder einen hydraulischen Stellzylinder und/oder ein elektrisches Stellglied umfasst wobei die zumindest eine lenkbare Stützrolle (3) in einer Lagerung (5) des Anbaugeräts (2) gelagert ist und der Stellantrieb im Bereich der Lagerung (5) in oder an dem Anbaugerät (2) und/oder in der Lagerung (5) angeordnet ist,
**dadurch gekennzeichnet,**
**dass** die Lenkbewegung der Stützrolle (3) auch über eine Pneumatik oder einen Seilzug erfolgt.

2. Einachsgeräteträger (1) nach Anspruch 1, **dadurch gekennzeichnet, dass** der hydraulische Stellantrieb einen Hydraulikmotor umfasst.

3. Einachsgeräteträger (1) nach einem der vorherigen Ansprüche, **dadurch gekennzeichnet, dass** die Steuerung ein Steuersignal von einem elektronisch arbeitendem Handlenker und/oder einer Fernsteuerung erhält.

4. Einachsgeräteträger (1) nach einem der vorherigen Ansprüche **gekennzeichnet durch** Sensoren, wobei die Sensoren mit der Steuerung in Wirkverbindung stehen und eine Bewegung des Einachsgeräteträgers (1) und des Anbaugeräts (2) überwachen.

5. Einachsgeräteträger (1) nach Anspruch 4 **dadurch gekennzeichnet, dass** die Steuerung die Sensorwerte der Bewegung mit Steuerbefehlen des elektronisch arbeitendem Handlenkers und/oder der Fernsteuerung vergleicht und bei einer Abweichung einen automatischen Steuerbefehl an die zumindest eine Stützrolle (3) und/oder die Radeinheiten (4) gibt.

6. Einachsgeräteträger nach einem der vorherigen Ansprüche, **dadurch gekennzeichnet, dass** die Stützrolle (3) eine Stachelwalze (11) umfasst.

7. Einachsgeräteträger nach einem der vorherigen Ansprüche, **dadurch gekennzeichnet, dass** die zumindest eine Stützrolle (3) in einem Bereich eines seitlichen Ende (10) des Anbaugeräts angeordnet ist.

## Claims

1. Single-axle device carrier (1) comprising an exchangeable attachment (2), wherein the attachment (2) comprises at least one support roller (3) which is steerable, wherein the attachment (2) comprises at least two support rollers (3), wherein the control of the at least one support roller (3) is coupled to a steering of wheel units (4) of the single-axle device carrier (1), so that a movement of the at least one support roller (3) and the wheel units (4) is accelerated and/or decelerated in a coordinated manner, wherein a steering movement of the support roller (3) takes place via an actuator and the actuator comprises a hydraulic worm gear and/or a hydraulic actuating cylinder and/or an electric actuator, wherein the at least one steerable support roller (3) is mounted in a bearing (5) of the attachment (2) and the actuator is arranged in or on the attachment (2) and/or in the bearing (5) in the section of the bearing (5),
**characterized in**
**that** the steering movement of the support roller (3) is also effected via a pneumatic system or a cable pull.

2. Single-axle device carrier (1) according to claim 1, **characterized in that** the hydraulic actuator comprises a hydraulic motor.

3. Single-axle device carrier (1) according to one of the previous claims, **characterized in that** the control system receives a controlling signal from an electronically operating manual steering device and/or a remote control.

4. Single-axle device carrier (1) according to one of the previous claims, **characterized by** sensors, wherein the sensors are operatively connected to the control system and monitoring a movement of the single-axle device carrier (1) and the attachment (2).

5. Single-axle device carrier (1) according to claim 4, **characterized in that** the control unit compares the sensor values of the movement with control commands of the electronically operating manual steering device and/or remote control and, in the event of a deviation, gives an automatic control command to the at least one support roller (3) and/or the wheel units (4).

6. Single axle device carrier according to one of the previous claims, **characterized in that** the support roller (3) comprises a spiked roller (11).

7. Single axle device carrier according to one of the previous claims, **characterized in that** the at least one support roller (3) is arranged in a section of a lateral end (10) of the attachment.

## Revendications

1. Porte-outils à un essieu (1), comportant un équipement annexe échangeable (2), dans lequel l'équipement annexe (2) comporte au moins un rouleau de support (3) qui est orientable, dans lequel l'équipement annexe (2) comporte au moins deux rouleaux de support (3), dans lequel le moyen de commande de l'au moins un rouleau de support (3) est couplé à un système de direction des unités de roues (4) du porte-outils à un essieu (1) de sorte qu'un mouvement de l'au moins un rouleau de support (3) et des unités de roues (49) soit accéléré et/ou décéléré de manière harmonisée entre ces dernières,
dans lequel un mouvement de direction du rouleau de support (3) a lieu par l'intermédiaire d'un actionneur et l'actionneur comporte un engrenage à vis sans fin hydraulique et/ou un vérin d'actionnement hydraulique et/ou un élément d'actionnement électrique, dans lequel l'au moins un rouleau de support orientable (3) est monté dans un moyen de montage (5) de l'équipement annexe (2) et l'actionneur est disposé à l'endroit du moyen de montage (5) dans ou sur l'équipement annexe (2) et/ou dans le moyen de montage (5),
**caractérisé par le fait**
**que** le mouvement de direction du rouleau de support (3) s'effectue également par l'intermédiaire d'un système pneumatique ou d'un système de traction par câble.

2. Porte-outils à un essieu (1) selon la revendication 1, **caractérisé par le fait que** l'actionneur hydraulique comporte un moteur hydraulique.

3. Porte-outils à un essieu (1) selon l'une des revendications précédentes, **caractérisé par le fait que** le moyen de commande reçoit un signal de commande d'un moyen de direction manuel à fonctionnement électronique et/ou d'une commande à distance.

4. Porte-outils à un essieu (1) selon l'une des revendications précédentes, **caractérisé par** des capteurs, dans lequel les capteurs sont en liaison active avec le moyen de commande et surveillent un mouvement du porte-outils à un essieu (1) et de l'équipement annexe (2).

5. Porte-outils à un essieu (1) selon la revendication 4, **caractérisé par le fait que** le moyen de commande compare les valeurs du capteur du mouvement avec les ordres de commande du moyen de direction manuel à fonctionnement électronique et/ou de la commande à distance et délivre, en cas d'écart, un ordre de commande automatique à l'au moins un rouleau de support (3) et/ou aux unités de roues (4).

6. Porte-outils à un essieu selon l'une des revendications précédentes, **caractérisé par le fait que** le rouleau de support (3) comporte un rouleau à dents (11).

7. Porte-outils à un essieu selon l'une des revendications précédentes, **caractérisé par le fait que** l'au moins un rouleau de support (3) est disposé dans une zone d'une extrémité latérale (10) de l'équipement annexe.
